Europäisches Patentamt

(19) European Patent Office

Office européen des brevets

(11) Publication number: 0 118 300
A2

## (12) EUROPEAN PATENT APPLICATION

(21) Application number: 84301417.6

(22) Date of filing: 02.03.84

(51) Int. Cl.³: C 03 B 9/44

(30) Priority: 04.03.83 US 472298

(43) Date of publication of application:
12.09.84 Bulletin 84/37

(84) Designated Contracting States:
DE FR GB IT

(71) Applicant: EMHART INDUSTRIES, INC.
426 Colt Highway
Farmington Connecticut 06032(US)

(72) Inventor: Gorski, Richard Alan
175 Babbs Road
West Suffield CT 06093(US)

(74) Representative: Drury, Peter Lawrence et al,
P.O. Box No. 88 Belgrave Road
Leicester LE4 5BX(GB)

(54) Takeout mechanism.

(57) A takeout mechanism for removing glass articles from a continuously rotating glassware making machine and transferring them to a moving conveyor. The mechanism comprises a mounting plate (2), opposed gear means (22, 24) having lever portions (26) extending therefrom, two takeout arms (12, 14) mounted for rotation on the plate (2) between open and closed positions, the lever portions (26) being connected to the takeout arms (12, 14), rack means (50, 52) mounted on the plate (2) and engaging the gear means (22, 24), and means (54, 56, 78, 82) for driving the rack means (50, 52) to open and close the takeout arms (12, 14).

Fig.1

EP 0 118 300 A2

## TAKEOUT MECHANISM

## BACKGROUND OF THE INVENTION

This invention relates to an improved takeout mechanism. More particularly, it relates to an improved takeout mechanism for removing blown glass articles from the individual forming units of a rotary continuous motion glassware making machine and transferring them to a continuously moving conveyor.

As shown in U.S. Patent No. 4,339,264, issued to Francis A. Dahms on July 13, 1982, which patent is incorporated by reference in this disclosure in its entirety, a plurality of takeout jaw mechanisms are mounted on a continuously moving turret. With the jaw members of an individual takeout mechanism open, the takeout mechanism is rotated by the turret in a position to pick up the blown articles from the machine. The jaws are closed about the articles and the jaw members are continuously rotated until the articles are over a moving conveyor whereupon the jaws members again open and the articles are swept away by the conveyor.

Because of the relatively high speed which the mechanism is rotated, it is important that it be of sturdy construction and that the jaw members be positively driven into their open and closed position. Additionally, in the event that any part of the takeout mechanism becomes damaged, it is desirable that the mechanism be easily and quickly removed from the turret and a new one inserted into its place. Additionally, in the event that the jaws or mounting fingers become slightly misaligned, it is desirable that the takeout arms be adjusted without removing the mechanism from the turret.

SUMMARY OF THE INVENTION

In view of the above, it is an object of the present invention to provide an improved takeout mechanism.

More particularly, it is an object of the present invention to provide a takeout mechanism which is easily removable from the turret.

Another object of the present invention is to provide a takeout mechanism which has a positive drive.

Still another object of the present invention, it is the provision of a takeout mechanism having individual adjustment of the takeout arms.

A preferred embodiment of the takeout mechanism of the present invention includes a mounting plate having opposed gear means mounted for rotation thereon. A lever portion extends outwardly from each of the gear means in opposed relationship. A pair of takeout arms are mounted for rotation on the said plate between an open and closed position. Means interconnect each lever portion with an associated takeout arm. Rack means are mounted on said plate for reciprocal movement and is engaged by the gear means. Driving gear means is mounted on the plate and engages the rack means. Means is provided for driving the driving gear means to move the rack in one direction to cause the takeout arms to open. Means are also provided to urge the rack in the opposite direction to cause the takeout arms to close.

DESCRIPTION OF THE DRAWINGS

Figure 1 is a top plan view of a takeout mechanism constructed in accordance with the present invention.

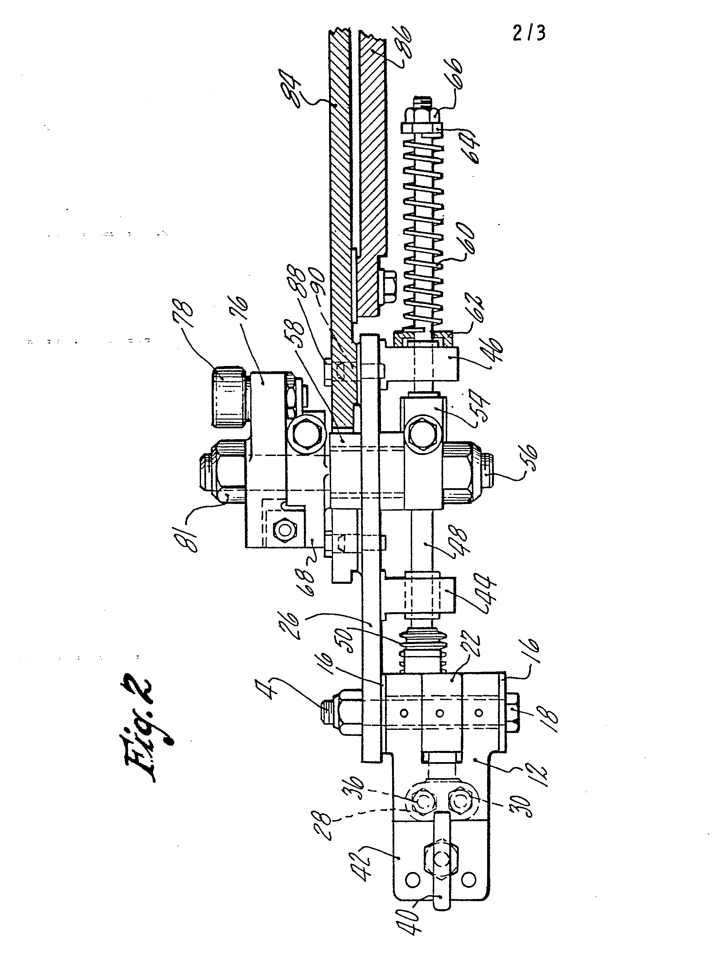

Figure 2 is a side view of the takeout mechanism shown in Figure 1.

Figure 3 is a view taken along the lines 3-3 of Figure 2.

DETAILED DESCRIPTION

The takeout mechanism of the present invention includes a mounting plate 2. Two spaced screw shafts 4 and 6 extend through and downwardly from the mounting plate 2 and are held in place by means of hex nuts 8 and 10 respectively and form shafts for the mounting of takeout arms. The takeout arms 12 and 14 have bifurcated mounting portions mounted on the screw shafts 4 and 6, respectively as shown. Hardened thrust washers 16 may be placed between the underside of the mounting plate 2 and the top edge of the support brackets 12 and 14 and also between the head 18 of the screw members 4 and 6 and the bottom surface of the takeout arms 12 and 14. As will be noted, the takeout arms 12 and 14 extend outwardly from the front of the plate member 2. Also mounted on each of the screw shafts 4 and 6 in the area between the bifurcated portions of the takeout arms 12 and 14 are gear segments 22 and 24 respectively. Each gear segment 22 and 24 has a lever portion 26 extending forwardly of the mounting block 2 and terminating in a vertically elongated boss 28.

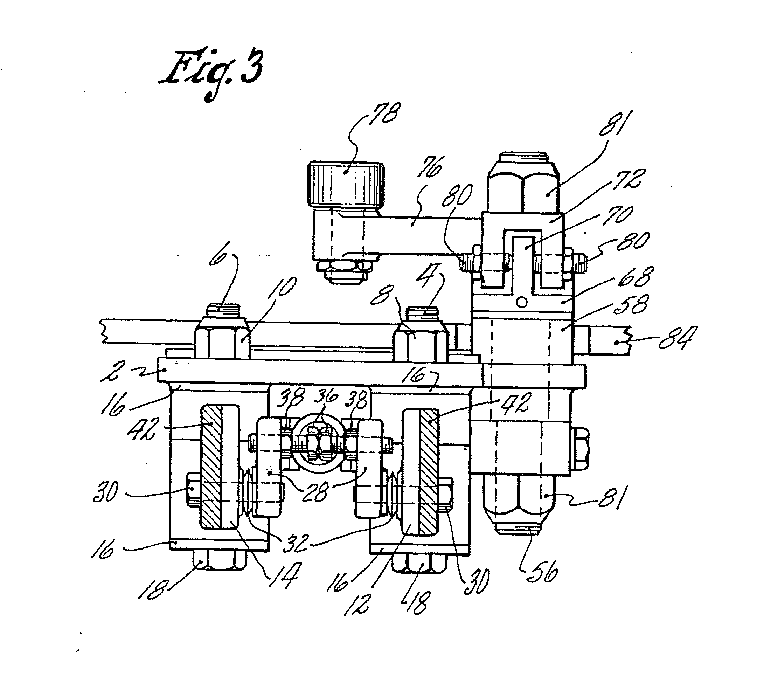

Each of the takeout arms 12 and 14 are connected to their respective lever portions 26 of the gear segments 22 and 24 by means of a hex head cap screw 30 which extends through its respective takeout arm 12 and 14 and threadedly engages the boss 28 of its respective lever portion 26 of the gear segments 22 and 24. Belleville washers 32 or the like are interposed between each takeout arm 12 and 14 and the respective lever portion 26 of its associated gear segment 22 and 24 as shown particularly in Figure 3.

As will be noted from Figure 3 the theaded bore 34 which receives the screw member 30 is located in the lower portion of. the boss 28. of the lever portion 26 of the gear segments 22 and 24. The upper portion of each boss 28 of the lever portion 26 of the gear segments 22 and 24 is also provided with a threaded bore 34 in which a hex headed cap screw 36 is mounted with the head portion thereof being positioned at the inside of the takeout arms 12 and 14. The head portion of each screw 36 present opposed stop faces to each other as shown in Figure 3. Lock nuts 38 are provided on each of the screw members for the purpose of securing them in place. Attached to each of the takeout arms 14 and 16 by wing screws 40 are jaw fingers 42 on which are mounted the jaw members (not shown).

Extending along the underneath side of the mounting plate 2 and mounted in bearing blocks 44 and 46 is an elongated shaft 48. A circular rack 50 is mounted on the shaft 48 at the forward end thereof which engages with gear segments 22 and 24. The rear portion of the shaft 48 also has circular rack 52 mounted thereon which engages a gear segment 54 mounted on a shaft 56 extending through a boss 58 on the mounting plate 2. A compression spring 60 is mounted around the shaft 48 extends between a spring retainer 62 positioned against the rear bearing block 46 and a spring retaining nut 64 threaded on the end of the shaft. A jam nut 66 is provided on the end of the shaft rearwardly of the spring retaining nut 64 to prevent loosening of the spring retaining nut 64.

A collar member 68 is securely fixed to the shaft 56 on top of the boss 58 of the mounting plate 2. The collar member 68 includes an upstanding portion 70 which is embraced by an inverted U-shaped portion 72 of an upper collar member 74 from which a lever portion 76 extends which has a cam follower roller 78 at its outer extremity. The upper collar member 74 is rotatable with respect to the shaft but includes a set screw 80 passing through each of the legs of the inverted U-shape portion which engages either side of the upstanding portion 70 of the lower coller member 68 whereby rotation of the upper collar member 74 is transmitted to the lower collar member 68 and shaft 56. Hex nuts 81 are provided on the upper and lower ends of the shaft 56 to axially retain the gear segment 54 and the collar members 68 and 74 in the shaft 56.

The mounting plate 2 is affixed to a turret 84, which is rotatably driven about its center axis by a drive sleeve 86, by four screw members 88. Two locating dowels 90 are provided to provide proper adjustment.

The compression spring 60 urges the shaft 48 rearwardly which in turn causes the gear segments 22 and 24 to rotate in opposite directions until the head portions of each screw 36 in the lever portion 26 abut each other. At the same time, the movement of the shaft 48 rearwardly causes rotation of the gear segment 54 which in turn causes rotation of the shaft 48 lower coller 68 and upper collar 74 which in turn causes the cam follower roller 78 at the end of the lever portion 76 thereof to engage a stationery cam track 82. In this position, the jaw members are in their closed position.

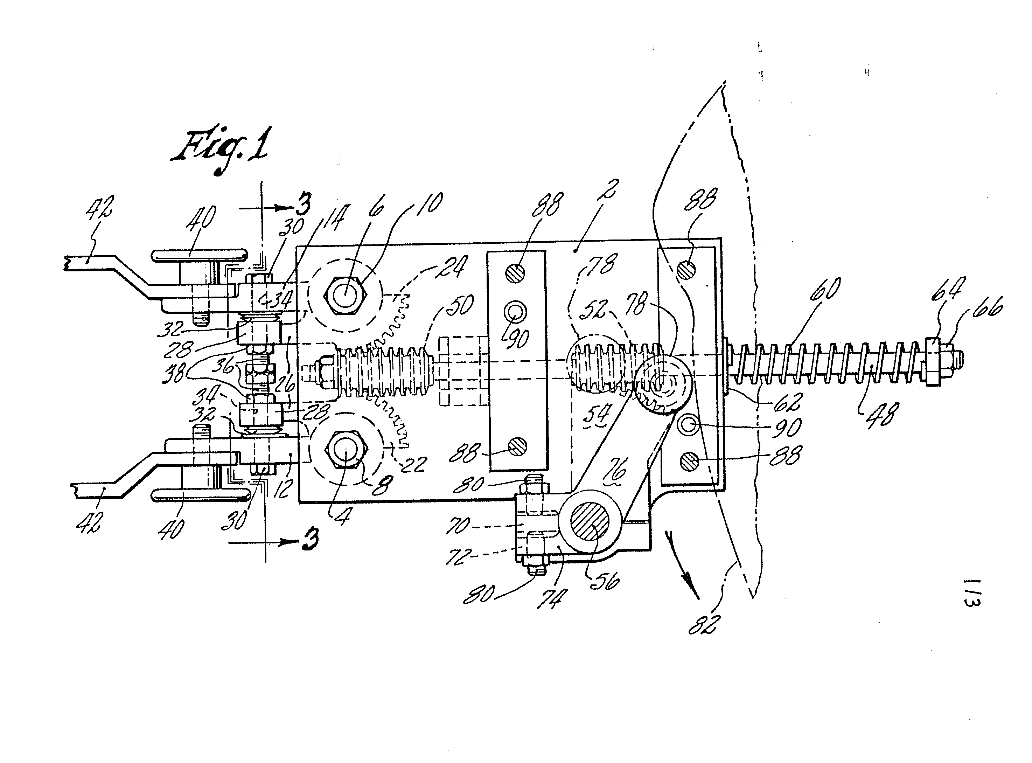

As the takeout mechanism rotates and it is desired to have the jaws open, a high spot is provided on the stationery cam 82 which engages the cam roller 78 and causes the lever portion 76 of the upper collar member 74 to rotate in a counter clockwise direction as viewed in Figure 1. This in turn causes the gear segment 54 to rotate which engages the rack portion 52 causing the shaft 48 to move forward. The forward movement of the shaft imparts rotational movement to the gear segments 22 and 24 through rack 50, causing the lever portions 24 to move apart which in turn causes the takeout arms 12 and 14 to pivot about their respective screw shafts 4 and 6 to their open position.

The set screws 80 provide a means for adjusting the angular position of the lever portion 76 to which the cam follower roller 28 is attached relative to the shaft 56. In the event that a jaw member or jaw finger 42 becomes slightly misaligned, the misalignment may be corrected by means of the hex head cap screws 30. Tightening of the screws tend to rotate the takeout arms 12 and 14 toward the lever portion 24 of the gear segments 22 or 24 against the urging of the Belleville washers 32. On the other hand, loosening one of the cap screws 30 results in the takeout arms 12 or 14 pivoting about the shafts 4 or 6 in a direction away from the lever portion 24.

The opposed screw members 28 provide a means for aligning the lever arm portions 24 of the gear segments 22 and 24 when the takeout mechanism has been removed the turret and also so that the proper distance is maintained between the two lever arm portions 24. An adjustment is also made so that the inner surface of the lever portions 24 are substantially parallel to the axis of the shaft 24 and are substantially parallel to each other.

As mentioned above, the mounting plate 2 is affixed to the turret 84 by means of four screw members 88. Thus if a part of the takeout mechanism would become damaged, as all the components of the takeout are fixed to the mounting plate 2, the entire unit may be easily removed by unloosening the four screw members 88 and removing the unit. A new unit which has been properly aligned on the bench

0118300

- 8 -

can easily be installed simply by tightening the four screw members resulting in a minimum of down time for the machine.

While reference has been made above to a specific embodiment of the present invention, it will be apparent to those skilled in the art that various modifications and alterations may be made thereto without departing from the spirit of the present invention. Therefore it is that the scope of this invention be ascertained by reference to the following claims.

- 9 -

WHAT IS CLAIMED IS:

1. A takeout mechanism including a mounting plate, opposed gear means mounted for rotation on said plate, a lever portion extending outwardly from each of said gear means in opposed relationship, a pair of opposed takeout arms mounted for rotation on said plate between an opened and closed position, means interconnecting each said lever portion with an associated takeout arm, rack means mounted on said plate for reciprocal movement and being engaged by said gear means, driving gear means mountrd on said plate and engaging said rack means, means for driving said driving gear means to move said rack in one direction to cause the takeout arms to open, and means urging said rack in the opposite direction to cause said takeout arms to close.

2. The takeout mechanism of Claim 1 wherein said means for driving said driving gear means includes a vertically extending shaft mounted on said plate and having one end attached to said driving gear, a lever member having one end attached to the other end of said shaft with its other end provided with a cam follower.

3. The takeout mechanism of Claim 2 further including means for adjusting the angular position of said lever with respect to said shaft.

4. The takeout mechanism of Claim 1 wherein said means for adjusting includes a collar member mounted on said vertically extending shaft, said collar member having an upstanding portion, said lever having an inverted U-shaped portion embracing said upstanding portion, and screw means passing through each of the legs of the inverted U-shaped portion engaging either side of the upstanding portions.

5. The takeout mechanism of Claim 1 further including means for adjusting the angular position of each takeout arm with respect to its associated lever portion.

6. The takeout mechanism of Claim 5 wherein said means for adjustment for each takeout arm includes a screw member passing through said takeout arm and threadingly engaging said lever portion, and spring means interposed between said lever portion and said takeout arm.

7. The takeout mechanism of Claim 1 wherein each said lever portion has a headed screw member threadedly secured therein, said heads of said screw members being an abutting engagement when said takeout arms are closed.

Fig.1

0118300

1/3

Fig. 2

Fig.3